Europäisches Patentamt

European Patent Office (11) Publication number: **0 096 015**

Office européen des brevets A2

(12) **EUROPEAN PATENT APPLICATION**

(21) Application number: 83830100.0

(51) Int. Cl.³: **F 02 F 1/42,** F 01 L 1/26

(22) Date of filing: **20.05.83**

(30) Priority: **31.05.82 IT 6770082**

(43) Date of publication of application: **07.12.83** Bulletin 83/49

(84) Designated Contracting States: **DE FR GB SE**

(71) Applicant: **FIAT AUTO S.p.A., Corso Giovanni Agnelli 200, I-10135 Torino (IT)**

(72) Inventor: **Burgio d'Aragona, Antonio, Strada Santa Brigida 64/14, I-10024 Moncalieri (Torino) (IT)**

(74) Representative: **Buzzi, Franco et al, c/o Jacobacci-Casetta & Perani S.p.A. Via Alfieri, 17, I-10121 Torino (IT)**

(54) **Cylinder head for a direct-injection diesel engine for motor vehicles.**

(57) A cylinder head (10) for a direct-injection diesel engine for motor vehicles has, for each cylinder, an air inlet (14) controlled by an inlet valve, and first and second inlet ducts (28, 30) disposed transversely on opposite sides of the inlet (14) and opening into the latter substantially tangentially in positions such as to cause the air admitted to the inlet (14) to exhibit rotary motions with same directions of rotation.

- 1 -

"Cylinder head for a direct-injection diesel engine for motor vehicles".

The present invention relates to a cylinder head for a direct-injection diesel engine for motor vehicles, of the type comprising a body having, for each cylinder, induction means including an air inlet with an annular valve seat and intended to be put into communication with the cylinder by an inlet valve cooperating with the valve seat, and exhaust means including an exhaust duct for the exhaust gases intended to be put into communication with the cylinder by an exhaust valve.

The object of the present invention is to provide a cylinder head of the type specified above, which is shaped to facilitate the adoption of a helical swirling motion by the air inducted by each cylinder so as to ensure a more complete combustion of the fuel mixture during the ignition phases.

According to the present invention, this object is achieved by virtue of the fact that the induction means comprise first and second air inlet ducts disposed transversely of the inlet, the two inlet ducts opening into the inlet substantially tangentially thereto in positions such that the air flows admitted to the inlet assume rotary motions with same directions of rotation.

According to the invention, the two inlet ducts open into a cylindrical cavity defined by the inlet upstream of the annular valve seat, the cylindrical cavity being separated from the annular valve seat by an axial, narrowed mouth part.

- 2 -

Preferably, but not necessarily, the first and second inlet ducts both have cross-sections of generally quadrilateral form.

The invention will now be described in more detail with reference to the appended drawings, provided purely by way of non-limiting example, in which:

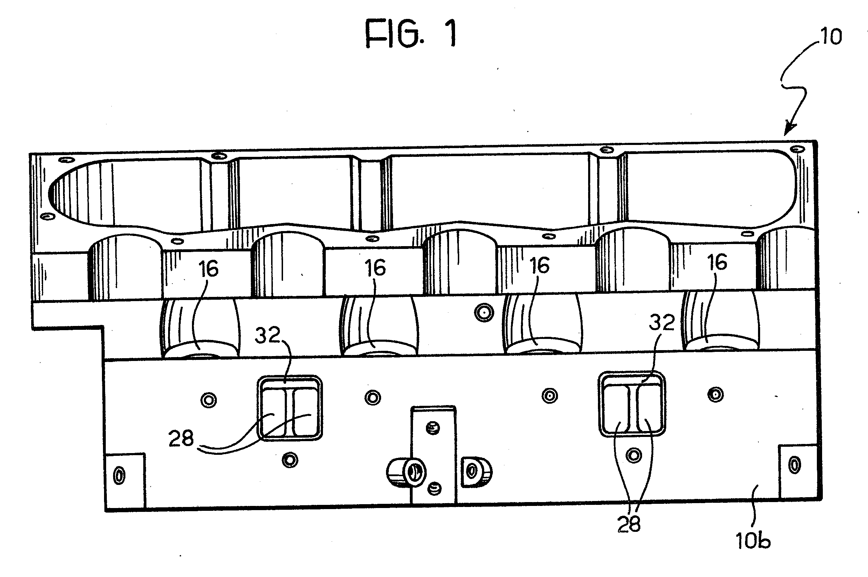

Figure 1 is a side elevation of a cylinder head according to the invention;

Figure 2 is a view similar to Figure 1 but rotated through 180° relative thereto;

Figure 3 is a cross-section taken on an enlarged scale on the line III-III of Figure 2;

Figure 4 is a cross-section taken on the line IV-IV of Figure 3,

Figure 5 is a cross-section taken on an enlarged scale on the line V-V of Figure 2, and

Figure 6 is a cross-section taken on the line VI-VI of Figure 4.

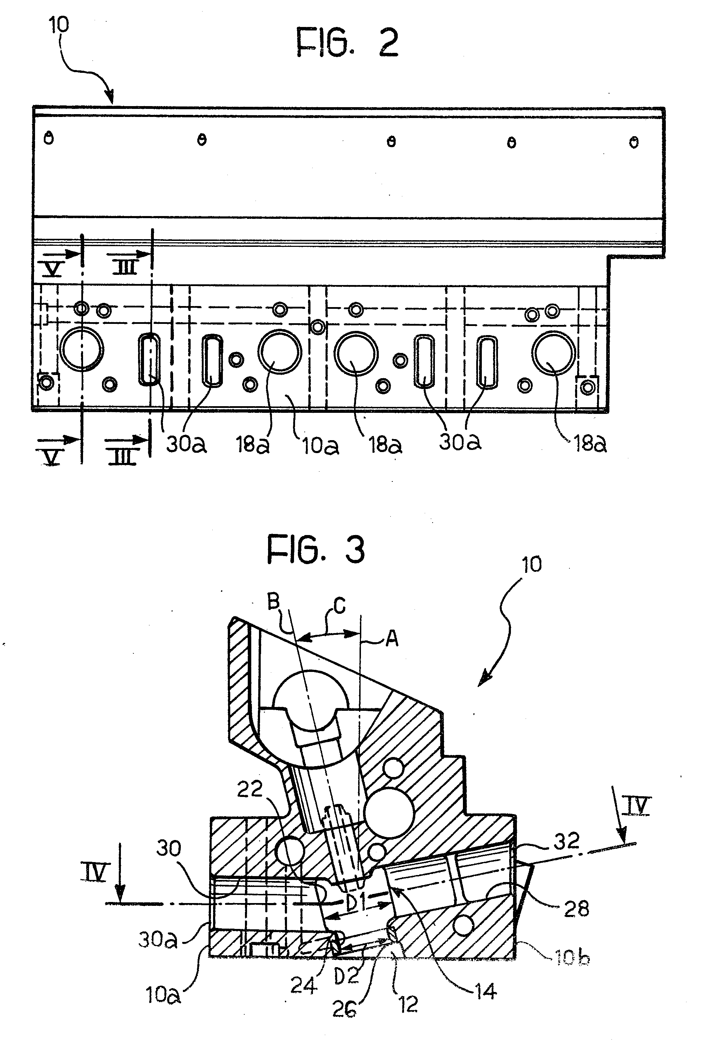

Referring to the drawings, a cylinder head for a direct-injection diesel engine for motor vehicles is generally indicated 10. The illustrated embodiment of the head is intended for fitting to an engine with four in-line cylinders, the axis of one of which is indicated A in Figures 3, 5 and 6.

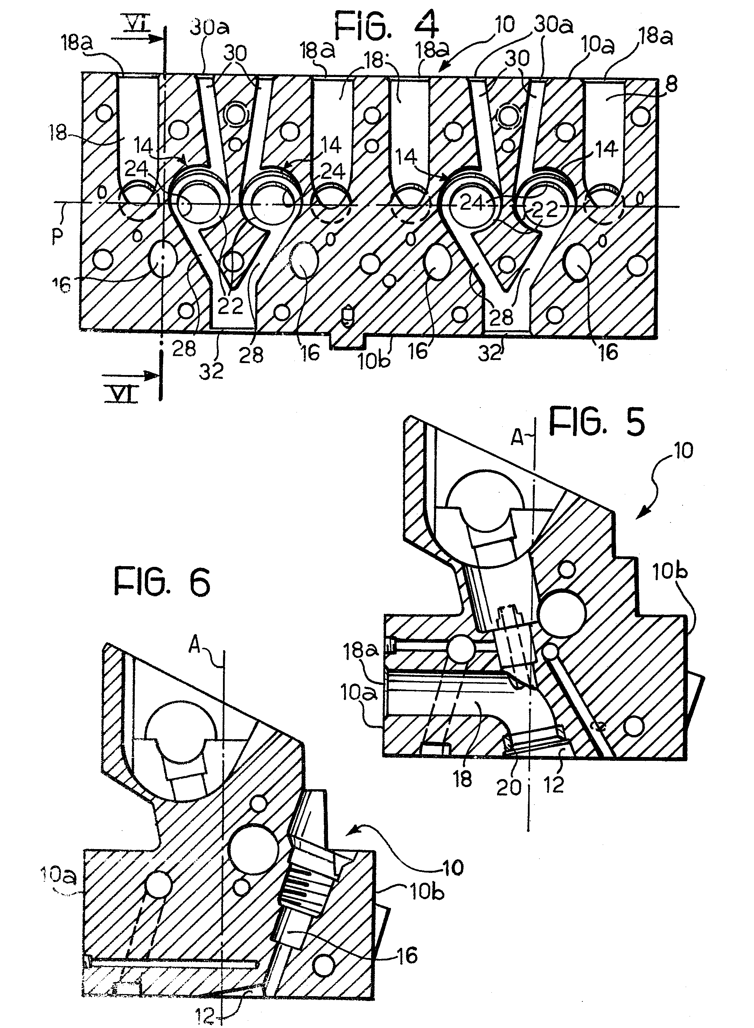

For each of the four cylinders, the head 10 defines a roof-shaped combustion chamber 12 into which open an air inlet, generally indicated 14, a port 16 inclined to the axis A for receiving a fuel injector (not shown), and an exhaust duct 18 for the exhaust gases. As is clearly illustrated in Figure 4, the inlets 14 are grouped in pairs with the two inlets 14 of each pair side-by-side and adjacent. This arrangement means that, starting at one end of the head in the section of Figure 4, one comes across, in succession, the exhaust duct 18 of one of the end cylinders of the line, the inlets 14 of this end cylinder and the intermediate one adjacent thereto, the two exhaust ducts 18 of the two intermediate cylinders, the inlets 14 of the other intermediate cylinder and the other end cylinder, and finally the exhaust duct 18 of the latter.

The four exhaust ducts 18 are of circular section, and each opens into one of the side walls 10a of the head at circular exhaust ports 18a. Moreover, as is best seen in Figure 5, each of the exhaust ducts 18 defines at its inner end, that is, the end immediately adjacent the respective combustion chamber 12, an annular valve seat 20 with which a valve of conventional type, not shown in the drawings, is intended to cooperate.

Each inlet 14 is formed by a cylindrical cavity 22 having an axis B at an angle C to the axis A of the respective cylinder, and connected to the combustion chamber 12 through an axial mouth part 24 the end of which opposite the cylinder cavity 22 defines an annular valve seat 26 for a normal inlet valve, not illustrated in the drawings. The ratio of the diameter $D_1$ of the cylindrical cavity 22 to the diameter $D_2$ of the mouth 24 is conveniently between about 1 and 1.5, and is preferably about 1.35.

- 4 -

Into each of the cylindrical cavities 22 open first and second inlet ducts 28, 30 respectively, which are disposed transversely and on opposite sides of the inlet 14. As is clearly visible in Figure 4, the two inlet ducts 28, 30 of each pair open tangentially into diametrally opposite zones of the respective cylindrical cavity 22. These ducts 28, 30 have rectangular cross-sections with their larger sides of a length substantially equal to the axial length of the cylindrical cavity 22. Moreover, the cross-sectional area of each of the inlet ducts 28, 30 is substantially equal to half the cross-sectional area of the exhaust ducts 18.

Referring again to Figure 4, it may be noted that the inlet ducts 28, 30 in a horizontal section, are at an angle other than 90° to the plane P containing the axes of the cylinders. The inlet ducts 30 associated with each pair of inlets 14 diverge from each other and open at the side wall 10a of the head 10 at respective spaced apart inlet ports 30a between the exhaust ports 18a of the two end cylinders and the exhaust ports 18a of the two intermediate cylinders.

The inlet ducts 28 associated with each adjacent pair of inlets 14 converge and unite at a common inlet port 32 on the side wall 10b of the head opposite to the wall 10a. The two inlet ports 32 have a section substantially equal to the sum of the sections of the respective inlet ducts 28.

As is clearly seen in Figure 3, in the example

- 5 -

illustrated, each of the inlet ducts 28 is arranged with its axis perpendicular to the axis B of the cylindrical cavity 22 in vertical section while the axis of the other inlet duct 30 forms an angle slightly different from 90° with the axis B.

By virtue of the configuration of the head 10 described above, that is, the arrangement of the inlets 14 and their respective inlet ducts 28, 30, it is possible, in use, to make the two inducted air flows entering the cylindrical cavities 22 through the pairs of inlet ducts 28, 30 execute rotary swirling motions with **same** directions of rotation. These rotary motions are transformed into helical swirling motions when the air is drawn from the cavities 22 into the respective cylinders while the inlet valves are open. The regularity of the rotary motion of the air in the cavities 22 is facilitated by the quadrilateral shape of the ducts 28, 30 and the helical swirls in the air drawn into the cylinders are maintained and ensured by the presence of the narrow mouth 24 connecting each cavity 22 to its respective combustion chamber 12. Clearly, the characteristics of the swirling motion of the inducted air may be varied intentionally by changing the relative inclinations between the axes B of the inlets 14, the axes A of the cylinders, and those of the inlet ducts 28, 30, as well as the ratio between the diameters $D_1$ of the cylindrical cavities 22 and the diameters $D_2$ of the mouths 24, and the shape of the combustion chamber 12.

Finally, it must be noted that the axis B of each cylindrical cavity 22 could coincide with the axis A of the respective cylinder and, in this case, the roof-shaped chambers 12 would be absent and the inlet ducts 28, 30 could form substantially different angles with the axes B of the respective cylindrical cavity 22 from those of the illustrated embodiment.

0096015

- 7 -

CLAIMS:

1. Cylinder head (10) for a direct-injection diesel engine for motor vehicles, comprising a body (10) having, for each cylinder, induction means including an air inlet (14) having an annular valve seat (26) and intended to be put into communication with the respective cylinder by an inlet valve cooperating with the valve seat (26) and exhaust means including an exhaust duct (18) for the exhaust gases and intended to be put into communication with the respective cylinder by an exhaust valve, characterised in that the induction means further include, for each cylinder, first and second air inlet ducts (28, 30) disposed transversely of the respective inlet (14), the two inlet ducts (28, 30) opening into the inlet (14) substantially tangentially thereto in positions such that the respective air flows admitted to the inlet (14) exhibit rotary motions with some directions of rotation.

2. Cylinder head according to Claim 1, characterised in that the two inlet ducts (28, 30) open into a respective cylindrical cavity (22) defined by the inlet (14) upstream of its annular valve seat (26), the cylindrical cavity (22) being separated from the annular valve seat (26) by an axial mouth part (24).

3. Cylinder head according to Claim 2, characterised in that the ratio of the diameter $(D_1)$ of the cylindrical cavity (22) to the diameter $(D_2)$ of the mouth part (24) is between about 1 and 1.5.

4. Cylinder head according to Claim 3, characterised in that said ratio is about 1.35.

5.     Cylinder head according to Claim 1, characterised in that the inlet ducts (28, 30) have quadrilateral cross-sections.

6.     Cylinder head according to Claim 5, characterised in that the inlet ducts (28, 30) have rectangular cross-sections with larger sides substantially equal to the axial dimension of the respective cylindrical cavity (22).

7.     Cylinder head according to Claim 1 or Claim 2, characterised in that the cross-sectional area of each of the inlet ducts (28, 30) is substantially equal to half the cross-sectional area of each exhaust duct (18).

8.     Cylinder head according to Claim 2, characterised in that the axis of the two inlet ducts (28, 30) are substantially perpendicular to the axis (B) of ·the respective cylindrical cavity (22).

9.     Cylinder head according to Claim 2, characterised in that the axis (B) of each cylindrical cavity (22) is at an angle (C) to the axis (A) of the respective cylinder, and in that one (28) of the inlet ducts (28, 30) is perpendicular to the axis (B) of the respective cylindrical cavity (22) while the other (30) of the inlet ducts (28, 30) is at an angle other than 90° with the axis (B) of the cylindrical cavity (22).

10.     Cylinder head according to Claim 9, characterised in that the angle between the other (30) of the inlet ducts (28, 30) and the axis (B) of the cylindrical cavity (22), measured from the side of the cylin-

der, is greater than 90°.

11.     Cylinder head according to any one of the preceding claims, for use on an engine with a plurality
of in-line cylinders, characterised in that the inlets
(14) for the cylinders are grouped in pairs with the
two inlets (14) of each pair side-by-side  and  adjacent
each other, and in that the first inlet ducts (28) of
each adjacent pair of inlets (14) converge away therefrom and unite at a respective common lateral inlet
port (32) in the head (10), while the second inlet
ducts (30) of each adjacent pair of inlets (14) diverge
away therefrom and terminate at respective separate
lateral inlet ports (30a) in the head (10).

FIG. 1

# FIG. 2

10

V III 30a 18a 10a 18a 30a 18a

# FIG. 3

10

B C A

22

30

IV

IV

30a

10a 24 D2 26 12 14 10b 28 32

D1

0096015

FIG. 4

FIG. 5

FIG. 6